# EUROPEAN PATENT SPECIFICATION

(11) **EP 1 585 672 B1**
(45) Date of publication and mention of the grant of the patent: **03.09.2008**
(21) Application number: 03812997.9
(22) Date of filing: 11.12.2003
(51) Int. Cl.: B65B 35/50, B65G 57/32

(54) **ARTICLE ALIGNING APPARATUS**
ARTIKELAUSRICHTUNGSVORRICHTUNG
DISPOSITIF D'ALIGNEMENT D'ARTICLES

(30) Priority: 11.12.2002 GB 0228902
(43) Date of publication of application: 19.10.2005
(73) Proprietor: MeadWestvaco Packaging Systems LLC, Glen Allen, VA 23060 (US)
(72) Inventor: BRIDIER, Patrice, F-36230 Mers-sur-Indre (FR); VERGNAUD, Alain, F-36130 Cere (FR); BERNOIN, Marc, F-36290 Mézières-en Brenne (FR)
(74) Representative: Baldwin, Mark
(86) International application number: PCT/US2003/039680
(87) International publication number: WO 2004/052726

(56) References cited:
- EP-A- 0 865 988
- FR-A- 2 272 897
- US-A- 3 596 747
- US-A- 5 765 336

## Description

### Background of the Invention

This invention relates to packaging of primary articles such as so-called brick packages or interconnected cups or pots in multiple packaged cartons and is more particularly concerned with feeding articles from an in-feed and for initiating and then completing a loading operation of articles in a multiple tier carton.

A majority of known packaging machines are dedicated machines, which construct only one type of carton. Therefore, modem bottling plants are required to use a plurality of packaging machines to package different carton types, each machine taking up considerable floor space and being expensive to both purchase and operate.

A limited number of packaging machines are capable of packaging different sizes of one carton, for example, six, eight or twelve bottles of a wraparound carton. All such machines require adjustment when switching from one size or type of carton to another. This adjustment includes the manual removal of all of the cartons within the packaging machine and possibly the mechanical adjustment of components in the machine. During this changeover period, which can be thirty minutes or more, a machine cannot be used (known as "downtime"), which is an expensive delay in a bottling plant. Such a delay may even result in downtime for the entire bottling line, not just the packaging machine, if problems arise during the changeover procedure.

It is envisaged that the present invention can be used in various types of packaging machine.
Alternatively, the aligning apparatus of the present invention can be sold as an individual module to be fitted to new equipment or to existing equipment on a retro fit basis.

More particularly, this invention relates to a mechanism for aligning a plurality of rows of articles from an in-feed stream at an in-feed end of a packaging machine and is particularly useful for grouping together a plurality of bottles or connected pots in a multiple packaging machine.

In a known mechanism, each tier of articles is selected and aligned at the same time by means of a star wheel feeder. The star wheel feeder comprises two opposed star wheel mechanisms; each mechanism having a star wheel corresponding to a tier. Thus for a three tier pack, each mechanism has three star wheels mounted on a common shaft and adapted to the rotated in unison. Each tier of articles is fed to the star wheel and a backpressure applied to the articles to ensure a continuous flow. Each star wheel selects a particular article in the same relative position for each array and moves each array forward so that each tier is aligned. Thus, the star wheel assembly selects and aligns in one operation.

One problem with this approach is that as the speed of the star wheel assembly increases so does the likelihood that the article selection part of the process is not carried out properly and the wrong article from the array is selected, which results in the misalignment of the tiers. One consequence of this problem is that a packaging machine throughput is dictated by the speed of the star wheel assembly, which is undesirable.

Furthermore, US-A-3,596,747 discloses the use of article aligning means on an endless track for vertically aligning first and second article arrays fed by separate conveyors.

### Summary of the Invention

A first aspect of the present invention provides an apparatus for aligning a plurality of tiers of articles to be loaded into a carton, in which apparatus each article tier is delivered from a respective one of separate, moving in-feed streams, which apparatus comprises a first article conveyor for conveying articles to form a first moving in-feed stream for supplying a first article tier, a second article conveyor for conveying articles to form a second moving in-feed stream for supplying a second article tier at a different elevation than said first moving in-feed stream, and a first article alignment means mounted on an endless track for selecting a second article tier from said second moving stream to bring said second article tier into vertical alignment with said first article tier, so that said first and second article tiers are conveyed together in a vertically aligned fashion to an out-feed end of the apparatus for delivery to in-feed end of a packaging machine.

Preferably, the apparatus further comprising a third article conveyor for conveying articles to form a third moving in-feed stream for supplying a third article tier at a different elevation than either of the first or second moving in-feed streams, and a second article alignment means mounted on an endless track for selecting a third article tier from said third moving in-feed stream to bring said third article tier into vertical alignment with said first and second article tiers so that said first, second and third article tiers are conveyed together in a vertically aligned fashion to the out-feed end of the apparatus.

Preferably, said first article alignment means includes one or more lugs for engaging said second article tier, and said lug or lugs of said first alignment means are driven by drive means to bring said second article tier into alignment with said first article tier.

Preferably, said first and second article alignment means each includes one or more lugs for engaging a respective one of said second and third article tiers, and said lug or lugs of each alignment means are driven by drive means to bring said second and third article tiers into alignment with said first article tier.

Optionally, the apparatus further comprising control means to control the speed of the lug or lugs on the first and, as the case may be, second article alignment means to provide for control of the number of articles in each grouping and the position of alignment between adjacent tiers.

Preferably, the control means receives information regarding the speed of each article tier at the in-feed end of the article conveyors.

Optionally, said control means comprises a manual input means.

Optionally, said control means comprises a sensor arranged to measure the speed of articles at the in-feed end of the article conveyors.

Preferably, control means comprises a sensor arranged to measure the speed of the first article tier at the in-feed end of the first article conveyor.

Optionally, the apparatus has a sensor to measure the speed of said lug or lugs.

Optionally, said control means varies the speed of the lug or lugs to lie within the range plus or minus 1-30% of the speed of the articles at the in-feed end of the article conveyors.

Optionally, said control means varies the speed of the lug or lugs to lie within the range of plus or minus 1-30% of the speed of the articles at said position of alignment.

Optionally, the apparatus further comprising a controller, which controller comprises a central processor, a manual input means, and separate means controlled by said central processor for individually positioning and/or relocating the or each lug and the endless track.

Preferably, the controller controls the speed of rotation of the lugs.

Preferably, the controller controls a motor, which drives the lugs.

Optionally, the speed of supply of articles is alterable as required depending on the size or type of cartons that are to be aligned by the apparatus.

Optionally, the relative positions and state of motion of each of the moveable components is sensed using individual sensors and transmitted to the controller.

A second aspect of the present invention provides a method of metering and aligning a plurality of articles to be loaded into a carton, which method comprises forming each article tier from a respective one of separate, moving in-feed streams, and includes: conveying articles to form a first moving in-feed stream for supplying a first article tier; conveying articles to form a second moving in-feed stream for supplying a second article tier at a different elevation to the first article tier; selecting a second article tier from said second moving stream and bringing said second article tier into vertical alignment with a moving article forming said first article tier, such that the first and second article tiers are conveyed together in a vertically aligned fashion to an out-feed end of the apparatus for delivery to an in-feed end of a packaging machine.

Preferably, the speed at which said articles to form a moving stream are conveyed is received by control means which controls a selection means that performs the selection from said second moving stream.

Preferably, said speed is entered manually.

Preferably, said speed is sensed automatically.

Optionally, a packaging machine incorporating an alignment apparatus.

Optionally, said second moving in-feed stream is at a higher elevation than said first moving in-feed stream, and said first alignment means comprises a base plate for supporting said second article tier till said second article tier is vertically aligned with said first article tier so that said second article tier is placed on top of said first article tier at a downstream end of said base plate.

Optionally, said second moving in-feed stream is at a higher elevation than said first moving in-feed stream, said third moving in-feed stream is a a higher elevation than said second moving in-feed stream, said first alignment means comprises a first base plate for supporting said second article tier till said second article tier is vertically aligned with said first article tier so that said second article tier is placed on top of said first article tier at a downstream end of said first base plate, and said second alignment means comprises a second base plate for supporting said third article tier till said third article tier is vertically aligned with said second article tier so that said third article tier is placed on top of said second article tier at a downstream end of said second base plate.

Optionally, the or each alignment means comprises a curved reach for moving the second and/or third article tiers laterally toward the first article tier.

Optionally, said first and, as the case may be, second alignment means comprise a curved reach for moving the second and, as the case may be, third article tiers onto corresponding first and, as the case may be, second base plates.

### Brief Description of the Drawings

Exemplary embodiments of the invention will now be described by way of example only, with reference to the accompanying drawings in which:
- FIGURE 1: is a top plan view of the aligning apparatus according to an embodiment of the invention;
- FIGURE 2: is a side elevation view of the article alignment apparatus shown in Figure 1;

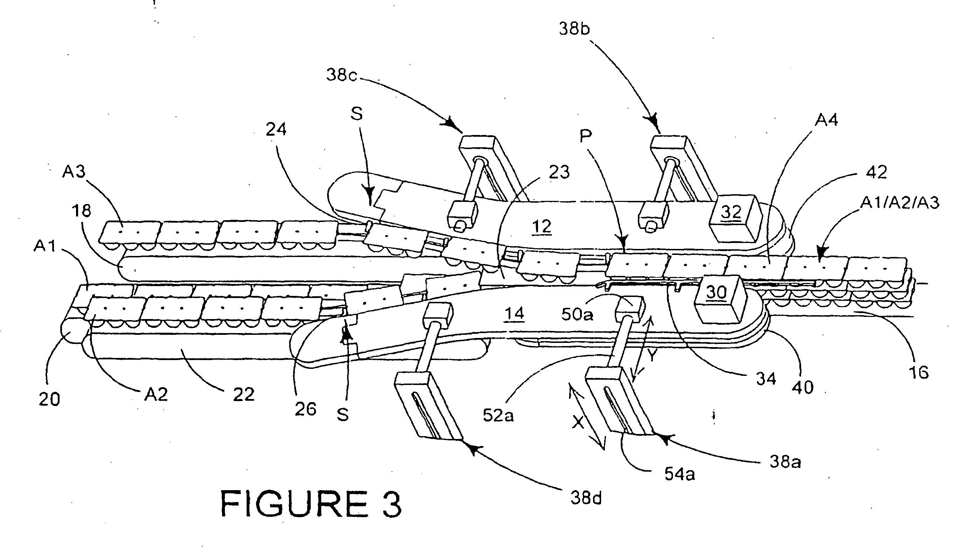

- FIGURE 3: is a perspective view of the article aligning apparatus shown in Figures 1 and 2.

### Detailed Description of the Preferred Embodiments

Referring to the drawings, there is shown an article aligning apparatus for selecting and aligning at least one article tier from a plurality of in-feed streams of article tier. Each in-feed stream supplies one tier of a multi tiered group of articles ready to be packaged into an outer carton.

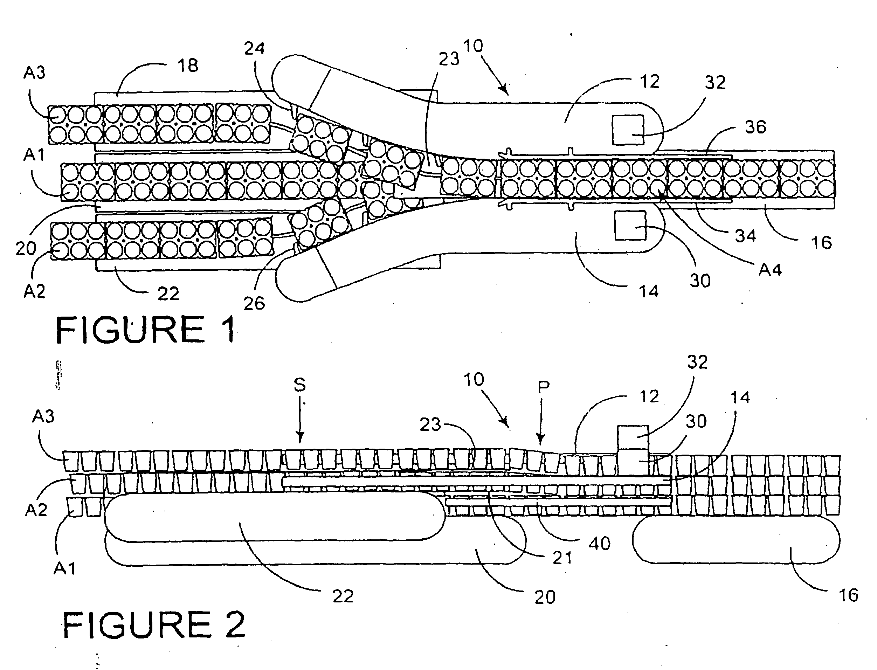

Referring first to Figure 1, there is shown there in-feed streams A1, A2, A3 on each of which there is supplied an array of connected pots, for example six arranged in two by three arrangement. Each in-feed stream A1, A2, A3 is supplied by article conveyors 20, 22 and 18.

The central article conveyor 20 supplies the lowest tier of articles A1. Conveyor 22 supplies an intermediate tier of articles A2 and conveyor 18 supplies the upper tier of articles A3. The intermediate and upper in-feed conveyors 18, 20 and 22 can be raised or lowered by suitable known devices so as to be able to convey articles with a different height. Thus the machine is able to package a variety of article types.

The lowest article arrays A1 are conveyed into the article aligning apparatus 10 and continue on the same path through the apparatus to the out-feed conveyor 16. The central in-feed stream A1 is continuously supplied with article arrays in abutment with the adjacent arrays due to the forward pressure applied to the stream.

In order to align the intermediate and upper article tiers A2, A3 with the lowermost tier A1, the aligning apparatus is provided with a pair of side lug assemblies 12, 14 supplied on opposed sides of the central article stream A1. Each lug assembly 12, 14 is provided with a plurality of lugs 24, 26 mounted on an endless chain which in turn is powered by suitable drive means 32, 30, for example servo motor.

The intermediate tier A2 is fed from the in-feed conveyor 22 to an aligning position P (Figure 2) in the apparatus by the lug assembly 14. Thus, an array A2 arrives upstream of the lug assembly 14 and an article of that array is engaged by the lug 26, shown in Figure 1, so that the article array is selected upstream (at point S in Figure 2) of the point of alignment P. The article array A2 is moved forward by the lug 26 and into co-planar arrangement with the central array A1. In some embodiments, the intermediate array A2 is supported on the underside by a suitable support means for example a plate 21. As the lug 26 continues to move forward, it moves the intermediate array A2 into vertical alignment with the lowermost array A1 so that at the front end of the base plate 21, the array A2 is placed directly on to the lowenmost array A in an aligned position.

By moving the article selection point S upstream of the alignment point P, the throughput speeds of this operation can be improved because the selection process is more accurate.

In those embodiments with a third (or upper) tier, for example as shown in Figures 1 and 2, the upper tier A3 is fed from the in-feed conveyor 18 to the aligning position P (Figure 2) in the apparatus by the lug assembly 12. Thus, an array A3 arrives upstream of the lug assembly 12 and an article of that array is engaged by the lug 24, shown in Figure 1, so that the article array is selected upstream (at point S in Figure 2) of the point of alignment P. The article array A3 is moved forward by the lug 24 and into co-planar arrangement with the central array A1. In some embodiments, the upper array A3 is supported on the underside by a suitable support means for example a plate 23. As the lug 24 continues to move forward, it moves the upper array A3 into vertical alignment with the lowermost array A1, and intermediate array A2 so that at the front end of the base plate 23, the array A3 is placed directly on to the intermediate array A2 in an aligned position.

In a preferred embodiment, forward movement of the lowest array A1 is controlled by a lug assembly 40, which in turn moves the multi tiered articles from the alignment point P to the out-feed end. Optionally fixed guides 34, 36 offer lateral support to the aligned grouping A4.

In order to align different article sizes, the lug assemblies 12, 14 can be moved in the 'X' and 'Y' planes, such that each assembly 12, 14 is connected to a frame 38a to 38d. Each frame is identical so only frame 38a will be described in any greater detail. Frame 38a comprises a connection device 50a connected to a moveable shaft 52a, which is moveable in both planes in a vertical slot 54a.

It is envisaged that the apparatus may be controlled by a suitable controller. The controller may be a dedicated processor or may be control means for a packaging machine with which the apparatus of the invention is used. Alternatively, the controller may preferably be a known programmable servo control system.

The controller has a central processor; a manual input means through which specific instructions can be programmed, and optionally, a display, which indicates useful information to the machine operator. The central processor and the display can display operational information such as the speed of operation of the machine and its compliance with particular safety requirements, in the normal manner.

The controller controls the positions of the moveable components as well as the speed of movement of variable speed components. For example, the central processor controls the motors 30, 32 that power the lug assemblies 12, 14 40, which move articles to be packed, so that the position and speed of each tier is known and can be adjusted to maintain accurate alignment.

Data regarding the in-feed rate of articles A1, A2, A3, the dimensions of the articles, the required number of articles in each grouping and the spacing of the lugs is input into the controller. The data may be input manually or may be supplied by one or more sensors (not shown) provided on the in-feed stream of the articles and the endless chain. Taking this data, the controller computes the relative positions of the articles at the in feed end of the article conveyor means. The controller then signals the drive means driving the apparatus to increase or decrease the downstream velocity of lug assemblies 12, 14 40 in order that the correct point of interposition can be achieved.

The control means is preferably capable of varying the speed of the lugs in the range plus or minus 1-30% of the speed of the articles at the aligning position.

If the device is switched regularly between a number of standard groupings and pitches, information regarding the dimensions of articles, and the spacing of the lugs preferably stored in memory associated with the controller to speed changeover between different configurations.

It will be recognised that as used herein the terms "top", "bottom" and "side" with respect to the device are relative terms, and that the device may be re-orientated as necessary or as desired.

Whilst the preferred embodiment described herein is for loading article arrays, it will be recognised that the invention is not limited to such pots. The invention may be used with machines for packaging, cans, bottles, and paperboard bricks into cartons.

The aligning apparatus of the present invention may be sold as an integral part of a packaging machine. Alternatively, the device may be sold as an individual module to be fitted to new equipment or existing equipment on a retrofit basis.

Numerous changes may be made within the scope of the present invention, for example for mechanism for deploying the lugs may be substituted for some form of hydraulic or pneumatic actuators, the design of the lug assemblies may be adjusted for different article types.

## Claims

1. Apparatus for aligning a plurality of tiers of articles to be loaded into a carton, in which apparatus each article tier (A1/A2/A3) is delivered from a respective one of separate, moving in-feed streams, which apparatus comprises a first article conveyor (20) for conveying articles to form a first moving in-feed stream for supplying a first article tier (A1), a second article conveyor (22) for conveying articles to form a second moving in-feed stream for supplying a second article tier (A2) at a different elevation than said first moving in-feed stream, and a first article alignment means (14) mounted on an endless track for selecting a second article tier (A2) from said second moving stream to bring said second article tier into vertical alignment with said first article tier, so that said first and second article tiers are conveyed together in a vertically aligned fashion to an out-feed end of the apparatus for delivery to an in-feed end of a packaging machine.

2. An apparatus as claimed in claim 1, further comprising a third article conveyor (18) for conveying articles to form a third moving in-feed stream for supplying a third article tier (A3) at a different elevation than either of the first or second moving in-feed streams, and a second article alignment means (12) mounted on an endless track for selecting a third article tier (A3) from said third moving in-feed stream to bring said third article tier (A3) into vertical alignment with said first and second article tiers so that said first, second and third article tiers are conveyed together in a vertically aligned fashion to the out-feed end of the apparatus.

3. The apparatus as claimed in claim 1 wherein said first article alignment means (14) includes one or more lugs (26) for engaging said second article tier (A2), and said lug or lugs of said first alignment means are driven by drive means (30) to bring said second article tier into alignment with said first article tier.

4. The apparatus as claimed in claim 2 wherein said first (14) and second (12) article alignment means each includes one or more lugs (26/24) for engaging a respective one of said second and third article tiers (A2/A3), and said lug or lugs of each alignment means are driven by drive means (30/32) to bring said second and third article tiers into alignment with said first article tier.

5. The apparatus as claimed in claim 3 or 4, further comprising control means to control the speed of the lug or lugs (26) on the first (14) and, as the case may be, second (12) article alignment means to provide for control of the number of articles in each grouping and the position of alignment between adjacent tiers.

6. The apparatus as claimed in claim 5 wherein the control means receives information regarding the speed of each article tier at the in-feed end of the article conveyors (18/20/22).

7. The apparatus according to claim 5 or claim 6 wherein said control means comprises a manual input means.

8. The apparatus as claimed in any one of claims 5 to 7 wherein said control means comprises a sensor arranged to measure the speed of articles at the in-feed end of the article conveyors.

9. The apparatus as claimed in claim 8 wherein control means comprises a sensor arranged to measure the speed of the first article tier (A1) at the in-feed end of the first article conveyor (20).

10. The apparatus as claimed in any one of claims 5 to 9 having a sensor to measure the speed of said lug (26) or lugs.

11. The apparatus as claimed in any one of claims 5 to 10, wherein said control means varies the speed of the lug (26) or lugs to lie within the range plus or minus 1-30% of the speed of the articles at the in-feed end of the article conveyors.

12. The apparatus as claimed in any one of claims 5 to 10, wherein said control means varies the speed of the lug (26) or lugs to lie within the range of plus or minus 1-30% of the speed of the articles at said position of alignment.

13. The apparatus of claims 3 to 12, further comprising a controller, which controller comprises a central processor, a manual input means, and separate means controlled by said central processor for individually positioning and/or relocating the or each lug and the endless track.

14. The apparatus as claimed in claim 13, wherein the controller controls the speed of rotation of the lugs.

15. The apparatus as claimed in claim 14 wherein the controller controls a motor (30), which drives the lugs (14).

16. The apparatus as claimed in any of claims 13 to 15 wherein the speed of supply of articles is alterable as required to achieve the correct point of interposition.

17. The apparatus as claimed in any of claims 13 to 16 wherein the relative positions and state of motion of each of the moveable components is sensed using individual sensors and transmitted to the controller.

18. A method of metering and aligning a plurality of articles to be loaded into a carton, which method comprises forming each article tier (A1/A2/A3) from a respective one of separate, moving in-feed streams, and includes: conveying articles to form a first moving in-feed stream for supplying a first article tier (A1); conveying articles to form a second moving in-feed stream for supplying a second article tier (A2) at a different elevation to the first article tier; selecting a second article tier (A2) from said second moving stream and bringing said second article tier into vertical alignment with a moving article forming said first article tier, such that the first and second article tiers are conveyed together in a vertically aligned fashion to an out-feed end of the apparatus for delivery to an in-feed end of a packaging machine.

19. The method of claim 18, wherein the speed at which said articles to form a moving stream are conveyed is received by control means which controls a selection means (14) that performs the selection from said second moving stream.

20. A method as claimed in claim 19, wherein said speed is entered manually.

21. The method of claim 20 wherein, said speed is sensed automatically.

22. A packaging machine incorporating an alignment apparatus as claimed in any of claims 1 to 10.

23. The apparatus as claimed in any one of claims 1 to 12, wherein said second moving in-feed stream is at a higher elevation than said first moving in-feed stream, and said first alignment means (14) comprises a base plate 21 for supporting said second article tier (A2) till said second article tier is vertically aligned with said first article tier (A1) so that said second article tier is placed on top of said first article tier at a downstream end of said base plate.

24. The apparatus as claimed in any one of claims 2, 4 to 12, wherein said second moving in-feed stream is at a higher elevation than said first moving in-feed stream, said third moving in-feed stream is a a higher elevation than said second moving in-feed stream, said first alignment means (14) comprises a first base plate (21) for supporting said second article tier (A2) till said second article tier (A2) is vertically aligned with said first article tier (A1) so that said second article tier is placed on top of said first article tier at a downstream end of said first base plate (21), and said second alignment means (12) comprises a second base plate (23) for supporting said third article tier (A3) till said third article tier is vertically aligned with said second article tier so that said third article tier is placed on top of said second article tier at a downstream end of said second base plate (23).

25. The apparatus as claimed in any one of claims 1 to 12, wherein the or each alignment means (14/12) comprises a curved reach for moving the second and/or third article tiers (A2/A3) laterally toward the first article tier (A1).

26. The apparatus as claimed in any of claims 23 to 25, wherein said first (14) and, as the case may be, second (12) alignment means comprise a curved reach for moving the second (A2) and, as the case may be, third (A3) article tiers onto corresponding first (21) and, as the case may be, second (23) base plates.

## Patentansprüche

1. Vorrichtung zum Ausrichten einer Vielzahl von Lagen von Gegenständen, die in eine Schachtel geladen werden sollen, wobei in der Vorrichtung jede Gegenstandslage (A1/A2/A3) von einem jeweiligen separaten, sich bewegenden Einspeisungsstrom zugeführt wird, wobei die Vorrichtung eine erste Gegenstandsfördereinrichtung (20) zum Befördern von Gegenständen aufweist, um einen ersten sich bewegenden Einspeisungsstrom auszubilden, um eine erste Gegenstandslage (A1) zuzuführen, eine zweite Gegenstandsfördereinrichtung (22) zum Befördern von Gegenständen, um einen zweiten sich bewegenden Einspeisungsstrom auszubilden, um eine zweite Gegenstandslage (A2) bei einer anderen Höhe als der erste sich bewegende Einspeisungsstrom zuzuführen, sowie erste Gegenstandsausrichtungsmittel (14), die auf einer Endlosspur montiert sind, um eine zweite Gegenstandslage (A2) aus dem zweiten sich bewegenden Strom auszuwählen, um die zweite Gegenstandslage in eine vertikale Ausrichtung mit der ersten Gegenstandslage zu bringen, so dass die erste und die zweite Gegenstandslage zusammen in einer vertikal ausgerichteten Art und Weise zu einem Ausspeisungsende der Vorrichtung befördert werden, um einem Einspeisungsende einer Verpackungsmaschine zugeführt zu werden.

2. Vorrichtung nach Anspruch 1, wobei die Vorrichtung ferner eine dritte Gegenstandsfördereinrichtung (18) zum Befördern von Gegenständen umfasst, um einen dritten sich bewegenden Einspeisungsstrom auszubilden, um eine dritte Gegenstandslage (A3) bei einer anderen Höhe als der erste oder der zweite sich bewegende Einspeisungsstrom zuzuführen, sowie zweite Gegenstandsausrichtungsmittel (12), die auf einer Endlosspur montiert sind, um eine dritte Gegenstandslage (A3) aus dem dritten sich bewegenden Einspeisungsstrom auszuwählen, um die dritte Gegenstandslage (A3) in eine vertikale Ausrichtung mit der ersten und der zweiten Gegenstandslage zu bringen, so dass die erste, zweite und dritte Gegenstandslage zusammen in einer vertikal ausgerichteten Art und Weise zu dem Ausspeisungsende der Vorrichtung befördert werden.

3. Vorrichtung nach Anspruch 1, wobei die ersten Gegenstandsausrichtungsmittel (14) einen oder mehrere Zapfen (26) umfassen, um die zweite Gegenstandslage (A2) in Eingriff zu nehmen, und wobei der Zapfen oder die Zapfen der ersten Ausrichtungsmittel durch Antriebsmittel (30) angetrieben werden, um die zweite Gegenstandslage in Ausrichtung mit der ersten Gegenstandslage zu bringen.

4. Vorrichtung nach Anspruch 2, wobei die ersten (14) und die zweiten (12) Gegenstandsausrichtungsmittel jeweils einen oder mehrere Zapfen (26/24) umfassen, um jeweils die zweite und die dritte Gegenstandslage (A2/A3) in Eingriff zu nehmen, und wobei der Zapfen oder die Zapfen von jeden Ausrichtungsmitteln durch Antriebsmittel (30/32) angetrieben werden, um die zweite und die dritte Gegenstandslage in Ausrichtung mit der ersten Gegenstandslage zu bringen.

5. Vorrichtung nach Anspruch 3 oder 4, wobei die Vorrichtung ferner Steuermittel umfasst, um die Geschwindigkeit des Zapfens oder der Zapfen (26) auf den ersten (14) und gegebenenfalls den zweiten (12) Gegenstandsausrichtungsmitteln zu steuern, um eine Steuerung der Anzahl von Gegenständen in jeder Gruppierung und der Position der Ausrichtung zwischen benachbarten Lagen zu ermöglichen.

6. Vorrichtung nach Anspruch 5, wobei die Steuermittel Information hinsichtlich der Geschwindigkeit jeder Gegenstandslage an dem Einspeisungsende der Gegenstandsfördereinrichtungen (18/20/22) erhalten.

7. Vorrichtung nach Anspruch 5 oder 6, wobei die Steuermittel manuelle Eingabemittel umfassen.

8. Vorrichtung nach einem der Ansprüche 5 bis 7, wobei die Steuermittel einen Sensor umfassen, der angeordnet ist, um die Geschwindigkeit von Gegenständen an dem Einspeisungsende der Gegenstandsfördereinrichtungen zu messen.

9. Vorrichtung nach Anspruch 8, wobei die Steuermittel einen Sensor umfassen, der angeordnet ist, die Geschwindigkeit der ersten Gegenstandslage (A1) an dem Einspeisungsende der ersten Gegenstandsfördereinrichtung (20) zu messen.

10. Vorrichtung nach einem der Ansprüche 5 bis 9, wobei die Vorrichtung ferner einen Sensor aufweist, um die Geschwindigkeit des Zapfens (26) oder der Zapfen zu messen.

11. Vorrichtung nach einem der Ansprüche 5 bis 10, wobei die Steuermittel die Geschwindigkeit des Zapfens (26) oder der Zapfen variieren, so dass diese innerhalb des Bereichs von plus oder minus 1-30% der Geschwindigkeit der Gegenstände an dem Einspeisungsende der Gegenstandsfördereinrichtungen liegt.

12. Vorrichtung nach einem der Ansprüche 5 bis 10, wobei die Steuermittel die Geschwindigkeit des Zapfens (26) oder der Zapfen variieren, so dass diese innerhalb des Bereichs von plus oder minus 1-30% der Geschwindigkeit der Gegenstände bei der Ausrichtungsposition liegt.

13. Vorrichtung nach einem der Ansprüche 3 bis 12, wobei die Vorrichtung ferner eine Steuereinheit umfasst, wobei die Steuereinheit einen Zentralprozessor umfasst, manuelle Eingabemittel sowie separate Mittel, die von dem Zentralprozessor gesteuert werden, um individuell den oder jeden Zapfen und die Endlosspur zu positionieren und/oder umzupositionieren.

14. Vorrichtung nach Anspruch 13, wobei die Steuereinheit die Rotationsgeschwindigkeit der Zapfen steuert.

15. Vorrichtung nach Anspruch 14, wobei die Steuereinheit einen Motor (30) steuert, der die Zapfen (14) antreibt.

16. Vorrichtung nach einem der Ansprüche 13 bis 15, wobei die Zuführungsgeschwindigkeit der Gegenstände variiert werden kann, wie dies für die Erreichung des richtigen Einfügungspunkts erforderlich ist.

17. Vorrichtung nach einem der Ansprüche 13 bis 16, wobei die relativen Positionen und der Bewegungszustand von jeder der beweglichen Komponenten unter Verwendung individueller Sensoren gemessen werden und zu der Steuereinheit übertragen werden.

18. Verfahren zum Bemessen und Ausrichten einer Vielzahl von Gegenständen, die in eine Schachtel geladen werden sollen, wobei das Verfahren das Ausbilden jeder Gegenstandslage (A1/A2/A3) aus einem jeweiligen separaten, sich bewegenden Einspeisungsstrom umfasst und die Schritte umfasst: das Befördern von Gegenständen, um einen ersten sich bewegenden Einspeisungsstrom auszubilden, um eine erste Gegenstandslage (A1) zuzuführen; das Befördern von Gegenständen, um einen zweiten sich bewegenden Einspeisungsstrom auszubilden, um eine zweite Gegenstandslage (A2) bei einer anderen Höhe als die erste Gegenstandslage zuzuführen; das Auswählen einer zweiten Gegenstandslage (A2) aus dem zweiten sich bewegenden Strom und das Ausrichten der zweiten Gegenstandslage in vertikaler Ausrichtung mit einem sich bewegenden Gegenstand, der die erste Gegenstandslage ausbildet, so dass die erste und die zweite Gegenstandslage in einer vertikal ausgerichteten Art und Weise zusammen zu einem Ausspeisungsende der Vorrichtung befördert werden, um einen Einspeisungsende einer Verpackungsmaschine zugeführt zu werden.

19. Verfahren nach Anspruch 18, wobei die Geschwindigkeit, mit der die Gegenstände, die einen sich bewegenden Strom ausbilden sollen, befördert werden, von Steuermitteln empfangen wird, die Auswahlmittel (14) steuern, die die Auswahl aus dem sich zweiten bewegenden Strom durchführen.

20. Verfahren nach Anspruch 19, wobei die Geschwindigkeit manuell eingegeben wird.

21. Verfahren nach Anspruch 20, wobei die Geschwindigkeit automatisch erfasst wird.

22. Verpackungsmaschine, die eine Ausrichtungsvorrichtung nach einem der Ansprüche 1 bis 10 umfasst.

23. Vorrichtung nach einem der Ansprüche 1 bis 12, wobei sich der zweite sich bewegende Einspeisungsstrom bei einer größeren Höhe als der erste sich bewegende Einspeisungsstrom befindet, und wobei die ersten Ausrichtungsmittel (14) eine Basisplatte (21) umfassen, um die zweite Gegenstandslage (A2) zu tragen, bis die zweite Gegenstandslage vertikal mit der ersten Gegenstandslage (A1) ausgerichtet ist, so dass die zweite Gegenstandslage auf der ersten Gegenstandslage an einem stromabwärts gelegenen Ende der Basisplatte angeordnet ist.

24. Vorrichtung nach einem der Ansprüche 2, 4 bis 12, wobei sich der zweite sich bewegende Einspeisungsstrom bei einer größeren Höhe als der erste sich bewegende Einspeisungsstrom befindet, sich der dritte sich bewegende Einspeisungsstrom bei einer größeren Höhe als der zweite sich bewegende Einspeisungsstrom befindet und die ersten Ausrichtungsmittel (14) eine erste Basisplatte (21) umfassen, um die zweite Gegenstandslage (A2) zu tragen, bis die zweite Gegenstandslage (A2) vertikal mit der ersten Gegenstandslage (A1) ausgerichtet ist, so dass die zweite Gegenstandslage auf der ersten Gegenstandslage an einem stromabwärts gelegenen Ende der ersten Basisplatte (21) angeordnet ist, und wobei die zweiten Ausrichtungsmittel (12) eine zweite Basisplatte (23) umfassen, um die dritte Gegenstandslage (A3) zu tragen, bis die dritte Gegenstandslage vertikal mit der zweiten Gegenstandslage ausgerichtet ist, so dass die dritte Gegenstandslage auf der zweiten Gegenstandslage an einem stromabwärts gelegenen Ende der zweiten Basisplatte (23) angeordnet ist.

25. Vorrichtung nach einem der Ansprüche 1 bis 12, wobei die oder alle Ausrichtungsmittel (14/12) eine gebogene Reichweite aufweisen, um die zweite und/oder die dritte Gegenstandslage (A2/A3) lateral in Richtung der ersten Gegenstandslage (A1) zu bewegen.

26. Vorrichtung nach einem der Ansprüche 23 bis 25, wobei die ersten (14) und gegebenenfalls die zweiten (12) Ausrichtungsmittel eine gebogene Reichweite aufweisen, um die zweite (A2) und gegebenenfalls die dritte (A3) Gegenstandslage auf eine entsprechende erste (21) und gegebenenfalls zweite (23) Basisplatte zu bewegen.

## Revendications

1. Appareil pour l'alignement de plusieurs niveaux d'articles destinés à être chargés dans un carton, dans cet appareil chaque niveau d'articles (A1/A2/A3) est délivré d'un flux respectif des flux d'alimentation séparés et étant en déplacement, cet appareil comporte un premier convoyeur d'articles (20) pour le transport d'articles constituant un premier flux d'alimentation mobile pour alimenter un premier niveau d'articles (A1), un deuxième convoyeur d'articles (22), pour transporter les articles formant un deuxième flux d'alimentation mobile pour alimenter un deuxième niveau d'articles (A2) à une hauteur différente de celle dudit premier flux d'alimentation mobile et un premier moyen d'alignement d'articles (14) monté sur une bande sans fin pour la sélection d'un deuxième niveau d'articles (A2) dudit deuxième flux mobile pour mettre ledit deuxième niveau d'articles en alignement vertical avec ledit premier niveau d'articles, de sorte que lesdits premier et deuxième niveaux d'articles soient conduits de manière verticalement alignée vers une extrémité de sortie de l'appareil et amenés par la suite vers l'extrémité d'alimentation d'une machine de conditionnement.

2. Un appareil selon la revendication 1, comprenant en outre un troisième convoyeur d'articles (18) pour le transport d'articles pour former un troisième flux d'alimentation mobile pour alimenter un troisième niveau d'articles (A3) à une hauteur différente de celle de l'un des premier ou deuxième flux d'alimentation mobiles, et un deuxième moyen d'alignement d'articles (12) monté sur une bande sans fin pour la sélection d'un troisième niveau d'articles (A3) dudit troisième flux d'alimentation mobile afin de mettre ledit troisième niveau d'articles (A3) dans un alignement vertical avec lesdits premier et deuxième niveaux d'articles de manière à ce que lesdits premier, deuxième et troisième niveaux d'articles soient conduits ensemble, de manière verticalement alignée, vers l'extrémité de sortie de l'appareil.

3. L'appareil selon la revendication 1 dans lequel ledit premier moyen d'alignement d'articles (14) comprend une ou plusieurs pattes (26) conçues pour venir en contact avec ledit deuxième niveau d'articles (A2), et lesdites patte ou pattes du premier moyen d'alignement sont conduites par un moyen de conduite (30) de manière à amener ledit deuxième niveau d'articles en alignement avec ledit premier niveau d'articles.

4. L'appareil selon la revendication 2 dans lequel chacun desdits premier (14) et deuxième (12) moyens d'alignement d'articles comprend une ou plusieurs pattes (26/24) conçues pour venir en contact avec un niveau respectif des deuxième ou troisième niveaux d'articles (A2/A3), et lesdites patte ou pattes de chaque moyen d'alignement sont conduites par les moyens de conduite (30/32) de manière à amener lesdits deuxième et troisième niveaux d'articles en alignement avec ledit premier niveau d'articles.

5. L'appareil selon les revendications 3 ou 4 comportant en outre un moyen de contrôle de la vitesse de la patte ou des pattes (26) sur le premier (14) et, selon le cas, le deuxième (12) moyen d'alignement d'articles pour permettre le contrôle du nombre d'articles dans chaque groupe et de la position d'alignement entre les niveaux adjacents.

6. L'appareil selon la revendication 5 dans lequel le moyen de contrôle reçoit des informations concernant la vitesse de chaque niveau d'articles à l'extrémité d'alimentation des convoyeurs d'articles (18/20/22).

7. L'appareil selon la revendication 5 ou la revendication 6 **caractérisé en ce que** ledit moyen de contrôle comprend un moyen de saisie manuelle.

8. L'appareil selon l'une quelconque des revendications 5 à 7 **caractérisé en ce que** ledit moyen de contrôle comprend un capteur adapté à mesurer la vitesse des articles à l'extrémité d'alimentation des convoyeurs d'articles.

9. L'appareil selon la revendication 8 dans lequel le moyen de contrôle comprend un capteur adapté à mesurer la vitesse du premier niveau d'articles (A1) à l'extrémité d'alimentation du premier convoyeur d'articles (20).

10. L'appareil selon l'une quelconque des revendications 5 à 9 ayant un capteur pour mesurer la vitesse desdites patte (26) ou pattes.

11. L'appareil selon l'une quelconque des revendications 5 à 10, **caractérisé en ce que** le moyen de contrôle modifie la vitesse de la patte (26) ou des pattes permettant sa limitation dans la fourchette de plus ou moins 1-30% de la vitesse des articles à l'extrémité d'alimentation des convoyeurs d'articles.

12. L'appareil selon l'une quelconque des revendications 5 à 10, dans lequel ledit moyen de contrôle modifie la vitesse de la patte (26) ou des pattes permettant sa limitation dans la fourchette de plus ou moins 1-30% de la vitesse des articles à la position d'alignement.

13. L'appareil selon les revendications 3 à 12, comprenant en outre un contrôleur, ce contrôleur comprend un processeur central, un moyen de saisie manuelle, et un moyen séparé contrôlé par ledit processeur central permettant de positionner et / ou déplacer individuellement la patte ou chaque patte et la bande sans fin.

14. L'appareil selon la revendication 13, dans lequel le contrôleur contrôle la vitesse de rotation des pattes.

15. L'appareil selon la revendication 14 dans lequel le contrôleur contrôle un moteur (30), qui anime les pattes (14).

16. L'appareil selon l'une quelconque des revendications 13 à 15 **caractérisé en ce que** la vitesse de l'approvisionnement en articles est modifiable selon les besoins pour atteindre le point d'interposition adéquat.

17. L'appareil selon l'une quelconque des revendications 13 à 16 dans lequel les positions relatives et l'état de mouvement de chacun des composants mobiles sont détectés en utilisant des capteurs individuels et transmis au contrôleur.

18. Une méthode de comptage et d'alignement d'une pluralité d'articles destinés à être chargés dans une boîte en carton, cette méthode comprend la constitution de chaque niveau d'articles (A1/A2/A3) de l'un des flux d'alimentation séparés respectifs, étant en déplacement, et inclut: le transport d'articles pour former un premier flux d'alimentation mobile pour alimenter un premier niveau d'articles (A1), le transport d'articles pour former un deuxième flux d'articles mobile pour alimenter un deuxième niveau d'articles (A2) à une hauteur différente de celle dudit premier niveau d'articles, la sélection d'un deuxième niveau d'articles (A2) dudit deuxième flux mobile et permettant de placer ledit deuxième niveau d'articles dans un alignement vertical avec un article mobile et ainsi formant ledit premier niveau d'articles de telle manière que le premier et le deuxième niveaux d'articles sont transmis ensemble, de façon verticalement alignée, vers une extrémité de sortie de l'appareil et par la suite amenés à l'extrémité d'alimentation d'une machine de conditionnement.

19. La méthode de la revendication 18, **caractérisée en ce que** la vitesse à laquelle lesdits articles constituant un flux mobile sont transportés est captée par le moyen de contrôle qui contrôle un moyen de sélection (14) qui effectue la sélection dudit deuxième flux mobile.

20. Une méthode selon la revendication 19, **caractérisée en ce que** ladite vitesse est entrée manuellement.

21. La méthode selon la revendication 20 **caractérisée en ce que** ladite vitesse est détectée automatiquement.

22. Une machine de conditionnement incorporant un appareil d'alignement tel que revendiqué dans l'une quelconque des revendications 1 à 10.

23. L'appareil selon l'une quelconque des revendications 1 à 12, **caractérisé en ce que** ledit deuxième flux d'alimentation mobile est situé à une hauteur plus élevée que celle dudit premier flux d'alimentation mobile, et ledit premier moyen d'alignement (14) comprend une plaque de base (21) pour soutenir ledit deuxième niveau d'articles (A2) jusqu'à ce que ledit deuxième niveau d'articles soit verticalement aligné avec ledit premier niveau d'articles (A1), de sorte que ledit deuxième niveau d'articles soit placé au dessus dudit premier niveau d'articles à une extrémité avale de ladite plaque de base.

24. L'appareil selon l'une quelconque des revendications 2, 4 à 12, dans lequel ledit deuxième flux d'alimentation mobile est situé à une hauteur plus élevée que celle dudit premier flux d'alimentation mobile, ledit troisième flux d'alimentation mobile se trouve à une hauteur plus élevée que l'hauteur dudit deuxième flux d'alimentation mobile, ledit premier moyen d'alignement (14) comprend une première plaque de base (21) pour soutenir ledit deuxième niveau d'articles (A2) jusqu'à ce que le deuxième niveau d'articles (A2) soit verticalement aligné avec ledit premier niveau d'articles (AI), de sorte que ledit deuxième niveau d'articles soit placé au dessus dudit premier niveau d'articles à une extrémité avale de ladite première plaque de base (21), et ledit deuxième moyen d'alignement (12) comprend une seconde plaque de base (23) pour soutenir ledit troisième niveau d'articles (A3) jusqu'à ce que ledit troisième niveau d'articles soit verticalement aligné avec ledit deuxième niveau d'articles de manière à ce que ledit troisième niveau d'articles soit placé au-dessus dudit deuxième niveau d'articles à une extrémité avale de ladite deuxième plaque de base (23).

25. L'appareil selon une quelconque des revendications 1 à 12, **caractérisé en ce que** le moyen ou chaque moyen d'alignement (14/12) comprend une extension incurvée pour déplacer latéralement le deuxième et / ou le troisième niveau d'articles (A2/A3) vers le premier niveau d'articles (AI).

26. L'appareil selon une quelconque des revendications 23 à 25, **caractérisé en ce que** le premier (14) et, selon le cas, le deuxième moyen d'alignement (12) comporte une extension incurvée pour déplacer le deuxième (A2) et, selon le cas, le troisième (A3) niveau d'articles sur les première (21) et, selon le cas, deuxième (23) plaques de base.
